# EUROPEAN PATENT APPLICATION

(11) **EP 0 839 866 A1**
(43) Date of publication of application: **06.05.1998**
(21) Application number: 97308506.1
(22) Date of filing: 24.10.1997
(51) Int. Cl.: C08L 73/00

(54) **Polymer blends**

(30) Priority: 31.10.1996 GB 9622717
(71) Applicant: BP Chemicals Limited, London EC2M 7BA (GB)
(72) Inventor: Gray, Alan, Grangemouth, Stirlingshire FK3 9XH (GB); Bonner, James Graham, Grangemouth, Stirlingshire FK3 9XH (GB); Loch, Raymond Joseph Michel, 62410 Wingles (FR); Dexarcis, Frantz Michel, 62410 Wingles (FR)
(74) Representative: Preece, Michael

(57) **Abstract**

A polymer blend composition comprising a polyketone and polystyrene is disclosed. The polystyrene can be a high impact polystyrene or crystal polystyrene The blends can be used for food packaging applications.

## Description

The present invention relates to a polymer blend composition comprising a polyketone and polystyrene.

For the purposes of this patent, polyketones are defined as linear polymers having an alternating structure of (a) units derived from carbon monoxide and (b) units derived from one or more olefinically unsaturated compounds.

Such polyketones have repeating units of the formula: 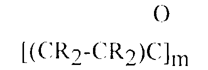 where the R groups are independently hydrogen or hydrocarbyl groups, and m is a large integer; they are disclosed in several patents e.g. US 3694412. Processes for preparing the polyketones are disclosed in US 3694412 and also in EP 181014 and EP 121965 and EP 619335. Polyketones particularly those prepared using ethylene and CO have high melting points which are close to the temperatures at which they undergo chemical degradation. EP 213671 teaches that polyketones comprising carbon monoxide, ethylene and an alpha olefin (e.g. propylene) units have lower melting points than corresponding copolymers comprised only of carbon monoxide and ethylene units.

Polystyrene on the other hand has a relatively low "melting point" and softening point However, in certain applications using polystyrene, a higher service temperature is required. Although properties of polystyrene such as stiffness, strength and toughness are generally acceptable for most applications, polystyrene is excluded for some applications because its softening point is too low. Therefore the problem to the problem to be solved is to increase the softening point of polystyrene while maintaining good physical properties when fabricated into articles.

It has now been found that the softening point of polystyrene can be increased by blending the polystyrene with polyketones while maintaining the compatibility of the two polymers in the polymer blend. Since the two polymers are compatible, they do not phase separate significantly and good physical properties are maintained upon fabrication. In addition, the blends exhibit good barrier properties (such as O₂-barrier) and are therefore particularly suitable for use in food packaging applications.

Thus according to the present invention there is provided a polymer blend composition comprising a polyketone and polystyrene.

The present invention solves the problem of increasing the softening point of polystyrene by blending with a polyketone. In addition, the barrier and chemical resistance properties of polystyrene can be improved while maintaining good physical properties.

As noted above for the purposes of this patent, polyketones are defined as linear polymers having an alternating structure of (a) units derived from carbon monoxide and (b) units derived from one or more olefinically unsaturated compounds. Suitable olefinic units are those derived from C₂ to C₁₂ alpha-olefins or substituted derivatives thereof or styrene or alkyl substituted derivatives of styrene. It is preferred that such olefin or olefins are selected from C₂ to C₆ normal alpha-olefins and it is particularly preferred that the olefin units are either derived from ethylene or most preferred of all from a mixture of ethylene and one or more C₃ to C₆ normal alpha-oletin(s) especially propylene. In these most preferable materials it is further preferred that the molar ratio of ethylene units to C₃ to C₆ normal alpha-olefin units is greater than or equal to 1 most preferably between 2 and 30. Typically, the polyketone will be a copolymer of ethylene/propylene/CO where the propylene is in the range 5-8% e.g. 6% by weight of the polymer. The Melt Flow Rate (5kg load at 240°C) is typically in the range 5-400 preferably 10-150, more preferably 20-100 for example 40-80g/10 mins. It is particularly advantageous to use polyketones having an MFR (5kg load at 240°C) in the range 40-80g/10 mins because morphological benefits in the blend are exhibited

The polyketone will suitably have weight average molecular weight of between 40,000 and 1,000,000 preferably between 50,000 and 250,000 for example 60,000 to 150,000. A preferred polyketone is an ethylen/propylen/CO terpolymer having a weight average molecular weight in the range 60,000 to 150,000.

As regards the polystyrene it can be a crystal polystyrene or high impact As regards the polystyrene it can be a crystal polystyrene or high impact polystyrene, (HIPS).

High-impact polystyrene is typically styrene that has been polymerised in the presence of a rubber modifier for example polybutadiene to give polystyrene with particles of the rubber modifier dispersed in the polymer matrix. Where polybutadiene is used in this way, it typically constitutes 3-10% by weight of the high impact polystyrene. The polystyrene may contain up to 20% by weight of a comonomer, for example maleic anhydride, butadiene or acrylonitrile. Typical of polystyrene with maleic anhydride comonomer are Dylark (ex Arco) and SMA (ex Elf-Atochem) resins. Typical of polystyrene with butadiene comonomer is K-Resins (ex Philips). Alternatively the polystyrene may be a stereoregular polystyrene such as a syndiotactic polystyrene (SPS). The steroregular polystyrene may typically be produced using a metallocene catalyst. Questra resins (ex Dow) are such polymers.

Where the polystyrene is a crystal polystyrene, the weight average molecular weight is preferably in the range 150,000-400,000 more preferably 220,000-320,000. Where the polystyrene is a high-impact polystyrene, the weight average molecular weight is in the range 180,000-220,000 for example 190,000-210,000.

The polymer blend composition of the present invention can be prepared using conventional techniques and equipment for batch or continuous blending

The weight ratio of polyketone to polystyrene is suitably in the range 1:10 to 10:1 preferably 1:3 to 3:1 more preferably 1:1.5 to 1.5:1 for example 1:1. If the softening point of the polystyrene is to be increased, then 1-50% preferably 30-50% e.g. 40% by weight of the polyketone based upon the polymer blend composition will typically be used. Other polymers may be blended with the blend composition of the present invention; the nature and amount of such a polymer will depend upon what modifications of the polymer properties are required. Furthermore the blends of the present invention may contain conventional polymer additives such as anti-oxidants, stabilisers, and mould release agents in particular those additives that are specifically used for either polystyrene or polyketones may be used. A man skilled in the art would, by standard experimentation, decide on suitable additives and optimise the loadings of such additives.

The scope of the present invention extends to articles, for example moulded articles, comprising the blends as defined hereinbefore.

The invention is illustrated by the following examples.

### Materials

The materials used in the blend experiments were:
HIPS - BP4300
(MFR: 22g/10mins @ 240°C, 5kg; Tg:97°C)
Polyketone - (an ethylene/propylene/CO terpolymer)
(MFR: 62g/10mins @ 240°C, 5kg; Tm: 200°C)

### Blend Preparation

Blends were prepared using a PRISM 16mm twin screw co-rotating extruder. The two materials were premixed before being fed to the extruder. The feed, barrel and die were set to temperatures of 180,195 and 205°C respectively, and a screw speed of 150 rpm was used. Output rates of 0.75kg/hour were maintained to give a 65% torque throughout production runs. Six blends were produced, containing 20, 40, 50, 60, 70 and 80% by weight of HIPS.

### Blend Characterisation

Differential scanning calorimetry (DSC) was used to determine the melting point of the polyketone phase in each material. A heating rate of 10°C/min up to 240°C was used to condition each material, then the sample was cooled at 10°C/min. The melting point (Tₘ) was obtained from second heating (10°C/min) and was taken as the peak of the melting curve.

The melt flow rate of each blend, was determined using a Davenport Melt Indexer. The test temperature was 240°C and a load of 5 kgs was used.

Scanning electron microscopy (SEM) was used to examine the phase morphology in the blends. Samples were prepared by cryopolishing a surface on a pellet of material.

The vicat softening point was measured on a plaque of each material with heating rate of 50°C/hour and a 1000g load.

Mechanical properties at room temperature were assessed using an Instron 1122 tensile tester on dumbbell samples whose dimensions and test conditions conformed with ASTM 638M.

The results of the characterisations are given in Table 1. The presence of HIPS has little effect on the polyketone melting point. This would indicate that the crystallinity of the polyketone did not significantly change suggesting that little or no degradation of the polyketone had occurred. SEM indicated that the blends were two phase with the dispersed phase existing as discrete small (25µm) phases, or in the case of the 50/50 or 60/40 weight/weight blends as co-continous phases. This suggests a relatively high degree of compatibility.

The addition of 40% by weight of polyketone to HIPS results in a 7°C increase in vicat softening point. The adition of greater quantities of polyketone results in even higher softening points. The addition of up to 60% by weight of polyketone to HIPS has little effect upon tensile strength. The addition of 70% and 80% by weight of polyketone to HIPS causes a respective 26% and 67% increase in tensile strength compared to that of HIPS alone. It was also noted that the viscosity o the blends was in many cases lower (higher MFR) than those for the constituent materials. This suggests some lubrication effect.

**TABLE 1**

| **Characterisation of Polyketone/HIPS Blends** | | | | | |
|---|---|---|---|---|---|
| Material | (°C) | (°C) | MFR (g/10mins) 240°C, 5kg) | Vicat softening point (°C) | Tensile Strength (MPa) |
| | Melting Points | | | | |
| Polyketone | - | 200 | 62 | 186 | 58.6 |
| Polyketone/HIPS (80/20 w/w) | 97 | 200 | 87 | 176 | 29.2 |
| Polyketone/HIPS (70/30 w/w) | 96 | 199 | 107 | 174 | 22.1 |
| Polyketone/HIPS (60/40 w/w) | 98 | 199 | 99 | 159 | 17.7 |
| Polyketone/HIPS (50/50 w/w) | 98 | 200 | 98 | 136 | 17.2 |
| Polyketone/HIPS (40/60 w/w) | 98 | 203 | 93 | 106 | 14.8 |
| Polyketone/HIPS (20/80 w/w) | 98 | 201 | 49 | 98 | 18.4 |
| HIPS | 97 | - | 22 | 99 | 17.5 |

In addition a blend of 50:50 by weight of unplasticised crystal polystyrene (HHIII), and polyketone was prepared. The polyketone was an ethylene/propylene/CO terpolymer having a melting point of 219°C and an MFR of 116 g/10mins (2.16kg load at 250°C); the crystal polystyrene was HHIII having an MFR = 11 g/mins (2,16kg load at 250°C). The Vicat softening point (as measured according to ISO 306B) of the blend and the crystal polystyrene (HHIII) were 110 and 100.4°C respectively.

## Claims

1. A polymer blend composition comprising a polyketone and polystyrene.

2. A polymer blend composition as claimed in claim 1 wherein the polyketone is an ethylene/propylene/CO terpolymer.

3. A polymer blend composition as claimed in claim 2 wherein the polyketone has a weight average molecular weight in the range 60,000-150,000.

4. A polymer blend composition as claimed in any one of claims 1 to 3 wherein the polystyrene is a crystal polystyrene.

5. A polymer blend composition as claimed in claim 4 wherein the crystal polystyrene has a weight average molecular weight in the range 220,000-320,000.

6. A polymer blend composition as claimed in any one of claims 1 to 3 wherein the polystyrene in a high-impact polystyrene.

7. A polymer blend composition as claimed in claim 6 wherein the high-impact polystyrene contains up to 20% by weight of a comonomer other than styrene.

8. A polymer blend composition as claimed in either claim 6 or claim 7 wherein the highg-impact polystyrene has a weight average molecular weight in the range 180,000- 220,000.

9. A polymer blend composition as claimed in any one of claims 1 to 8 wherein the weight ratio of polyketone to polystyrene is in the range 1:10 to 10:1.

10. A polymer blend composition as claimed in any one of claims 1 to 9 wherein the amount of polyketone in the composition is in the range 30-50% based upon the composition.

11. An article fabricated from a polymer blend composition as claimed in any one of claims 1 to 10.
